# EUROPÄISCHE PATENTSCHRIFT

(11) **EP 2 335 962 B1**
(45) Veröffentlichungstag und Bekanntmachung des Hinweises auf die Patenterteilung: **07.12.2011**
(21) Anmeldenummer: 10189775.9
(22) Anmeldetag: 03.11.2010
(51) Int. Cl.: B60K 7/00, B62D 5/04, B62D 7/02, B62D 15/02, B66F 9/075

(54) **Antriebseinheit eines Flurförderzeugs**
Drive unit of an industrial truck
Unité d'entraînement d'un chariot de manutention

(30) Priorität: 16.12.2009 DE 102009054726
(43) Veröffentlichungstag der Anmeldung: 22.06.2011
(73) Patentinhaber: ZF Friedrichshafen AG, 88038 Friedrichshafen (DE)
(72) Erfinder: Scharfenberg, Stephan, 99869, Friemar (DE)

(56) Entgegenhaltungen:
- EP-A1- 1 870 314
- EP-A2- 1 447 306
- WO-A1-2005/077695
- DE-A1-102007 038 584

## Beschreibung

Die vorliegende Erfindung bezieht sich auf eine Antriebseinheit eines Flurförderzeugs gemäß dem Oberbegriff des Patentanspruchs 1.

Antriebseinheiten von Flurförderzeugen, beispielsweise von Gabelstaplern umfassen in der Regel u. a. einen Fahrmotor, einen Lenkmotor und ein Getriebe, die oft mittels einer als separates Bauteil ausgeführten Rahmen- bzw. Trägerplatte verbaut sind, wobei die Rahmen- bzw. Trägerplatte erforderliche Sensoren und den Lenkantrieb aufnehmen kann.

Beispielsweise geht aus der EP 1466858 A2 ein Hochregalflurförderzeug hervor, welches eine Rahmen aufweist, an dem eine Antriebsbaugruppe, umfassend einen Fahrantriebsmotor und einen Lenkmotor befestigbar ist, wobei eine Trägerplatte vorgesehen ist, auf der die Antriebsbaugruppe vormontierbar ist. Zu diesem Zweck weist der Rahmen eine Schnittstelle zur lösbaren Befestigung der Trägerplatte auf.

Aus der EP 1634754 A1 ist eine weitere Antriebseinrichtung zum Betätigen von Fahrzeugrädern, insbesondere für Handhabungs- und Förderwagen bekannt, bei der die Lenkeinrichtung bzw. das Lenkgetriebe an einer Trägerplatte montiert ist.

Im Rahmen der DE 102007038584 A1 der Anmelderin, die den Oberbegriff des Anspruchs 1 bildet, wird eine Antriebseinheit eines Flurförderzeugs angegeben, bei der der Rahmenanschluss, welcher ein Teil des Getriebes eines Flurförderzeugs ist und den Fahrzeugrahmen und das Getriebe miteinander verbindet, die Funktionalität einer separaten Rahmen- bzw. Trägerplatte ganz oder teilweise übernimmt.

Insbesondere kann vorgesehen sein, dass der Rahmenanschluss der Fixierung des Dreh-/Lenklagers und/oder der Aufnahme des Lenkgetriebes der Antriebseinheit und/oder der Aufnahme sämtlicher oder einzelner Anbauteile der Antriebseinheit dient, wobei das Lenkgetriebe in den Rahmenanschluss integriert sein kann. Für den Fall, dass eine Rahmenplatte vorgesehen ist, wird diese an das Fahrzeug mittels des Rahmenanschlusses fixiert.

Die WO2005/077695A beschreibt eine Antriebseinheit eines Flurförderzeugs, umfassend einen Fahrmotor, ein Getriebe und einen Lenkmotor mit einem mit einem Lenkkranz der Antriebseinheit verbundenen Lenkgetriebe, wobei der Lenkkranz zumindest eine von zumindest einem Sensor zur Lenkwinkelerfassung abtastbare Einrichtung aufweist, wobei der zumindest eine Sensor zur Lenkwinkelerfassung durch die Rahmenplatte bzw. für den Fall, dass der Rahmenanschluss der Antriebseinheit die Funktionalität einer separaten Rahmenplatte übernimmt, durch den Rahmenanschluss geführt ist.

Bei den aus dem Stand der Technik bekannten Antriebseinheiten von Flurförderzeugen ist in der Regel ein außenverzahntes Lenkritzel vorgesehen, welches in einen Lenkkranz eingreift, auf dem sich Nocken befinden, welche zur Lenkwinkeleinstellung bzw. zur Lenkwinkelerkennung genutzt werden. Hierbei ist ein Sensor zur Abtastung der Nocke vorgesehen, der in eine entsprechend geformte Glocke angeordnet ist; ferner kann zur Lenkwinkelerfassung an der Lenkmotorwelle bzw. an einem separaten Stirnrad ein Potentiometer angebracht sein.

In nachteiliger Weise wird bei den aus dem Stand der Technik bekannten Antriebseinheiten eine Glocke als zusätzliches Bauteil benötigt, was in einer Erhöhung der Herstellungs- und Montagekosten sowie in einer Erhöhung des benötigten Bauraums und des Gesamtgewichts resultiert. Zudem sind die benötigten Sensoren, beispielsweise das Potentiometer zur Lenkwinkelerfassung nicht ausreichend vor Beschädigungen durch äußere Einwirkung geschützt.

Der vorliegenden Erfindung liegt die Aufgabe zugrunde, eine Antriebseinheit eines Flurförderzeugs anzugeben, bei der die Glocke zur Aufnahme des zumindest einen Sensors zur Lenkwinkelerfassung entfällt; zudem soll durch eine entsprechende Anordnung des zumindest einen Sensors zur Lenkwinkelerfassung eine kompakte Bauweise erzielt werden, wobei der zumindest eine Sensor vor Beschädigungen durch äußere Einwirkung ausreichend geschützt sein soll.

Diese Aufgabe wird durch die Merkmale des Patentanspruchs 1 gelöst. Weitere erfindungsgemäße Ausgestaltungen und Vorteile gehen aus dem Unteranspruch hervor.

Demnach wird eine Antriebseinheit eines Flurförderzeugs vorgeschlagen, umfassend einen Fahrmotor, ein Getriebe und einen Lenkmotor mit einem mit einem vorzugsweise als Lenkhohlrad ausgeführten Lenkkranz der Antriebseinheit verbundenen Lenkgetriebe, bei der der Lenkkranz zumindest eine von zumindest einem

Sensor zur Lenkwinkelerfassung abtastbare Einrichtung aufweist, wobei der zumindest eine Sensor zur Lenkwinkelerfassung durch die Rahmenplatte bzw. für den Fall, dass der Rahmenanschluss der Antriebseinheit die Funktionalität einer separaten Rahmenplatte übernimmt, durch den Rahmenanschluss geführt ist.

Gemäß der Erfindung wird die zumindest eine von zumindest einem Sensor zur Lenkwinkelerfassung abtastbare Einrichtung als Nocken ausgeführt, der mit dem Lenkkranz einteilig ausgeführt oder als separates, mit dem Lenkkranz verbundenes Teil ausgeführt sein kann.

Gemäß der Erfindung ist für den Fall, dass der Lenkkranz eine Innenverzahnung aufweist, die mit einem Antriebsritzel des Lenkgetriebes der Antriebseinheit kämmt, der zumindest eine Sensor zur Lenkwinkelerfassung derart angeordnet, dass durch den Sensor die Zähne der Innenverzahnung des vorzugsweise als Hohlrad ausgeführten Lenkkranzes abtastbar sind, wodurch der Lenkkranz auch als Winkelgeber bzw. dessen Innenverzahnung auch als von zumindest einem Sensor zur Lenkwinkelerfassung abtastbare Einrichtung dient. Dadurch entfällt in vorteilhafter Weise die Notwendigkeit des Vorsehens zumindest eines Nockens oder einer separaten Geberscheibe auf dem Lenkkranz.

Der zumindest eine Sensor zur Lenkwinkelerfassung kann beispielsweise als induktiver Sensor, Näherungssensor, Hall-Sensor oder als magnetoresistiver Sensor ausgeführt sein.

Durch die erfindungsgemäße Konzeption ist der zumindest eine Sensor zur Lenkwinkelerfassung ohne die Notwendigkeit einer separaten, Bauraum benötigenden Glocke zur Aufnahme des Sensors vor äußeren Einwirkungen weitgehend geschützt.

Die Erfindung wird im folgenden anhand der beigefügten Figuren beispielhaft näher erläutert. Es zeigen:
- Figur 1:: Eine schematische Schnittansicht einer gemäß der DE 102007038584 A1 der Anmelderin ausgeführten und gemäß einer ersten bevorzugten Ausführungsform der Erfindung modifizierten Antriebseinheit eines Flurförderzeugs;
- Figur 2:: Eine schematische Schnittansicht einer gemäß der DE 102007038584 A1 der Anmelderin ausgeführten und gemäß einer zweiten bevorzugten Ausführungsform der Erfindung modifizierten Antriebseinheit eines Flurförderzeugs; und
- Figur 3:: Eine schematische Schnittansicht einer gemäß der DE 102007038584 A1 der Anmelderin ausgeführten und gemäß einer dritten bevorzugten Ausführungsform der Erfindung modifizierten Antriebseinheit eines Flurförderzeugs.

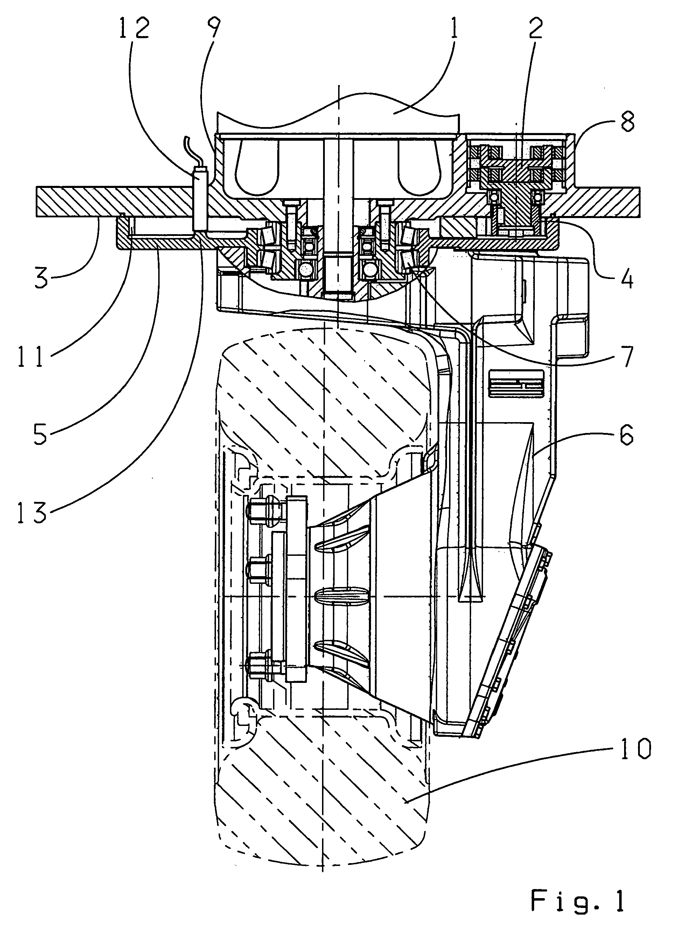

Bezugnehmend auf die Figuren 1, 2 und 3 umfasst die Antriebseinheit mit einem lenkbaren Antriebsrad 10 einen Fahrmotor 1 und einen Lenkmotor, dessen Lenkgetriebe mit 2 bezeichnet ist. Der Rahmenanschluss, welcher das Getriebe 6 mit dem Fahrzeugrahmen verbindet, ist mit 3 bezeichnet. Bei dem in der Figur gezeigten Beispiel ist das Lenkgetriebe 2 als Doppelplanetengetriebe ausgeführt und umfasst ein Ritzel 4, welches mit einem mittels Dreh -/Lenklager 7 gelagerten und als Lenkhohlrad 5 umfassend eine Innenverzahnung 11 ausgeführten Lenkkranz kämmt.

Wie aus den Figuren 1, 2 und 3 ersichtlich, dient bei dem gezeigten Beispiel der Rahmenanschluss 3 der Fixierung der Dreh-/Lenklager 7 und der Aufnahme des Lenkgetriebes 2 der Antriebseinheit und bildet das Gehäuse 8 des Lenkgetriebes 2 und das A-Lagerschild 9 des Fahrmotors 1 des Flurförderzeugs.

Gemäß einer ersten besonders vorteilhaften Ausführungsform der Erfindung und bezugnehmend auf Figur 1 ist vorgesehen, dass der als Lenkhohlrad 5 ausgeführte Lenkkranz als von dem zumindest einen Sensor 12 zur Lenkwinkelerfassung abtastbare Einrichtung zumindest einen Nocken 13 aufweist und dass der zumindest eine Sensor 12 zur Lenkwinkelerfassung durch die Rahmenplatte 3 geführt ist. Bei dem gezeigten Beispiel ist ein Nocken 13 vorgesehen, der sich im Windelbereich von 0 bis 180 ° erstreckt und mit dem Lenkkranz einteilig ausgeführt ist. Der zumindest eine Sensor 12 kann als induktiver Sensor, Näherungssensor, Hall-Sensor oder als magnetoresistiver Sensor ausgeführt sein.

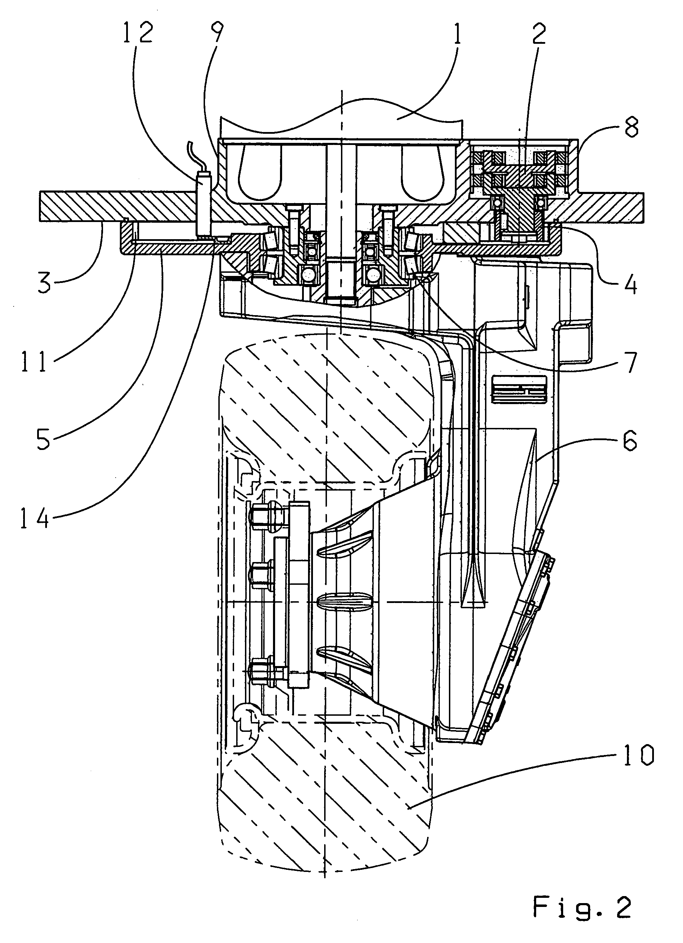

Gegenstand der Figur 2 ist eine weitere vorteilhafte Ausgestaltung der Erfindung. Hierbei weist der als Lenkhohlrad 5 ausgeführte Lenkkranz als von dem zumindest einen Sensor 12 zur Lenkwinkelerfassung abtastbare Einrichtung eine zusätzliche Geberscheibe 14 auf, welche eine vorgegebene Anzahl von äquidistant um den Umfang angeordnete Zähne bzw. von zumindest einem Sensor 12 zur Lenkwinkelerfassung abtastbare Elemente umfasst, wobei die Geberscheibe 14 mit dem Lenkkranz durch Form-, Kraft- oder Formschluss verbunden sein kann. Wie aus Figur 2 ersichtlich. ist der zumindest eine Sensor 12 zur Lenkwinkelerfassung durch die Rahmenplatte 3 geführt.

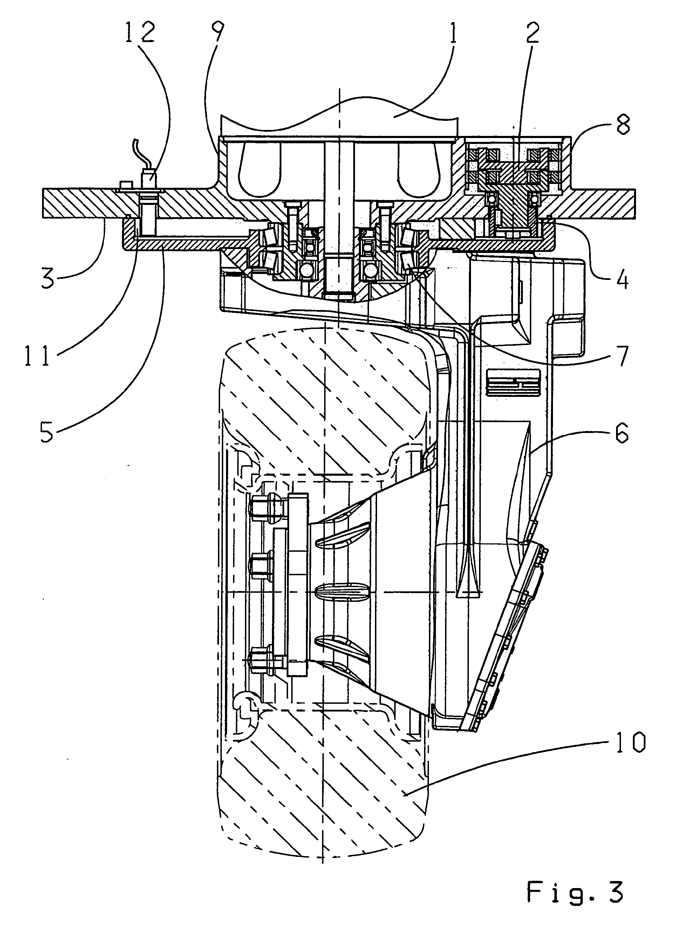

Bei dem in Figur 3 gezeigten Beispiel einer gemäß der Erfindung ausgeführten Antriebseinheit eines Flurförderzeugs ist vorgesehen, dass der zumindest eine Sensor 12 zur Lenkwinkelerfassung derart angeordnet ist, dass durch den Sensor 12 die Zähne der Innenverzahnung 11 des als Hohlrad 5 ausgeführten Lenkkranzes abtastbar sind, wodurch die Notwendigkeit des Vorsehens zumindest eines Nockens oder einer separaten Geberscheibe auf dem Lenkkranz entfällt. Gemäß der Erfindung ist der zumindest eine Sensor 12 zur Lenkwinkelerfassung durch die Rahmenplatte 3 der Abtriebseinheit geführt.

Selbstverständlich fällt auch jede konstruktive Ausbildung, insbesondere jede räumliche Anordnung der Bauteile einer Antriebseinheit eines Flurförderzeugs an sich sowie zueinander und soweit technisch sinnvoll, unter den Schutzumfang der vorliegenden Ansprüche, ohne die Funktion der Antriebseinheit, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Fahrmotor
- 2: Lenkgetriebe
- 3: Rahmenanschluss
- 4: Ritzel
- 5: Lenkhohlrad
- 6: Getriebe
- 7: Dreh-/Lenklager
- 8: Gehäuse des Lenkgetriebes
- 9: A-Lagerschild des Fahrmotors
- 10: Antriebsrad
- 11: Innenverzahnung
- 12: Sensor
- 13: Nocken
- 14: Geberscheibe

## Patentansprüche

1. Antriebseinheit eines Flurförderzeugs, umfassend einen Fahrmotor (1), ein Getriebe (6) und einen Lenkmotor mit einem mit einem Lenkkranz der Antriebseinheit verbundenen Lenkgetriebe (2), wobei der Lenkkranz eine ein Hohlrad (5) bildende Innenverzahnung aufweist, und das Lenkgetriebe (2) neben dem Hohlrad (5) ein Antriebsritzel (4) aufweist, und das Antriebsritzel (4) und das Hohlrad (5) kämmen, **dadurch gekennzeichnet, dass** der Lenkkranz (5) zumindest eine von zumindest einem Sensor (12) zur Lenkwinkelerfassung abtastbare Einrichtung (11, 13, 14) aufweist, wobei der zumindest eine Sensor (12) zur Lenkwinkelerfassung durch die Rahmenplatte bzw. für den Fall, dass der Rahmenanschluss (3) der Antriebseinheit die Funktionalität einer separaten Rahmenplatte übernimmt, durch den Rahmenanschluss (3) geführt ist und entweder die zumindest eine von zumindest einem Sensor (12) zur Lenkwinkelerfassung abtastbare Einrichtung als Nocken (13) ausgeführt ist, der mit dem Lenkkranz (5) einteilig oder als separates, mit dem Lenkkranz (5) verbundenes Teil ausgeführt ist, oder der zumindest eine Sensor (12) zur Lenkwinkelerfassung derart angeordnet ist, dass durch den Sensor (12) die Zähne der Innenverzahnung (11) abtastbar sind, so dass der Lenkkranz (5) auch als Winkelgeber dient.

2. Antriebseinheit eines Flurförderzeugs, nach Anspruch 1, **dadurch gekennzeichnet, dass** ein Nocken (13) vorgesehen ist, der sich im Winkelbereich von 0 bis 180 ° erstreckt.

## Claims

1. Drive unit of an industrial truck, comprising a traction motor (1), a transmission (6) and a steering motor with a steering transmission (2) which is connected to a steering ring of the drive unit, the steering ring having inner toothing which forms a ring gear (5), and the steering transmission (2) having, next to the ring gear (5), a drive pinion (4), and the drive pinion (4) and the ring gear (5) meshing, **characterized in that** the steering ring (5) has at least one device (11, 13, 14) which can be sensed by at least one sensor (12) for steering angle detection, the at least one sensor (12) for steering angle detection being guided by the frame plate or, for the case in which the frame connection (3) of the drive unit takes on the functionality of a separate frame plate, by the frame connection (3), and either the at least one device which can be sensed by at least one sensor (12) for steering angle detection being in the form of a cam (13) which is configured integrally with the steering ring (5) or as a separate part connected to the steering ring (5), or the at least one sensor (12) for steering angle detection being arranged in such a way that the teeth of the inner toothing (11) can be sensed by the sensor (12) such that the steering ring (5) also acts as angle transmitter.

2. Drive unit of an industrial truck according to Claim 1, **characterized in that** a cam (13) is provided which extends in the angle range of from 0 to 180°.

## Revendications

1. Unité d'entraînement d'un chariot de manutention, comprenant un moteur de conduite (1), une transmission (6) et un moteur de direction avec un mécanisme de direction (2) connecté à une couronne de direction de l'unité d'entraînement, la couronne de direction présentant une denture intérieure formant une couronne (5) et le mécanisme de direction (2) présentant en plus de la couronne (5) un pignon d'entraînement (4), et le pignon d'entraînement (4) et la couronne (5) s'engrenant, **caractérisée en ce que** la couronne de direction (5) présente au moins un dispositif (11, 13, 14) pouvant être balayé par au moins un capteur (12) pour détecter l'angle de direction, l'au moins un capteur (12), pour détecter l'angle de direction, étant guidé par la plaque de châssis, ou, dans le cas où le raccord de châssis (3) de l'unité d'entraînement adopte la fonction d'une plaque de châssis séparée, étant guidé par le raccord de châssis (3), et soit l'au moins un dispositif pouvant être balayé par au moins un capteur (12) pour détecter l'angle de direction étant réalisé sous forme de came (13) qui est réalisée d'une seule pièce avec la couronne de direction (5) ou sous forme de pièce séparée connectée à la couronne de direction (5), soit l'au moins un capteur (12) pour détecter l'angle de direction étant disposé de telle sorte que les dents de la denture intérieure (11) puissent être balayées par le capteur (12) de sorte que la couronne de direction (5) serve également de capteur angulaire.

2. Unité d'entraînement d'un chariot de manutention selon la revendication 1, **caractérisée en ce qu'**il est prévu une came (13) qui s'étend dans une plage angulaire de 0 à 180°.
